# EUROPEAN PATENT SPECIFICATION

(11) **EP 0 895 890 B1**
(45) Date of publication and mention of the grant of the patent: **27.12.2000**
(21) Application number: 98830413.5
(22) Date of filing: 08.07.1998
(51) Int. Cl.: B60J 10/02, B61D 25/00, E06B 3/54

(54) **Elastic fixing device for windshields and box or bodies lateral glass panes for vehicles, particularly for railway vehicles**
Vorrichtung für die elastische Befestigung von Fahrzeug-Windschutzscheiben oder Glasscheiben, insbesondere Schienenfahrzeuge
Dispositif pour la fixation élastique de pare-brises ou de vitrages pour véhicules, notamment ferroviaires

(30) Priority: 04.08.1997 IT RM970496
(43) Date of publication of application: 10.02.1999
(73) Proprietor: AGT S.r.l., 00192 Roma (IT)
(72) Inventor: Ugolini, Filippo, AGT S.r.l., 00192 Roma (IT)
(74) Representative: Iannone, Carlo Luigi

(56) References cited:
- DE-A- 2 027 708
- DE-A- 3 627 881
- FR-A- 1 221 758
- GB-A- 765 123

## Description

The present invention relates to an elastic fixing device for windshields and box or bodies lateral glass panes for vehicles as shown in DE-A-3 627 881, particularly for railway vehicles.

More particularly, the invention concerns a device of the above kind studied particularly in view of the fixing needing of the large railway windshields, but that can be in general used on any kind of glass pane, either it is a windshield or not, applied on any kind of vehicle o system where it is requested a high elasticity degree and the accommodation of big tolerances for the mounting between the glass and the support.

Obviously, the solution suggested according to the invention and described in the following can be applied also in different fields such as the automotive, aeronautical, nautical, ecc.

As it is well known, windshields of railway cars are usually comprised of anti-breaking stratified glass panes made up of an outer glass face, and inner layer of different plastic materials (polyvinyilbutyrrale, polyurethane, or a mixture thereof), a heating and/or anti-ice system for an integrated defrosting of the assembly, an inner glass pane and, in the most recent solutions, an anti-chips film.

The anti-breaking and impact resistance features of the windshield are due to the kind an to the thickness of the intermediate plastic layers which under the action of an impact, elasticity yield containing the impacting object and absorbing the impact.

During the impact phase, the outer and the inner glass pane, stressed beyond their own elasticity limit, yield, thus breaking, and the inner layer sends chips within the guide cabin, unless a further anti-chip film layer is provided.

Energy that the front glass pane must absorb is due to the combination of the mass and of the speed of the impacting projectile, these values being generally set by specific international rules.

The recent development of high speed trains, which is now generalised in many countries, involved a higher rigidity of the rules, now providing maximum limits of energy of 30,000 J, impacting mass up to 10 Kg, impact speed up to 530 KPH, impact glass pane temperature up to - 35°C. Said values are the maximum values for each parameter, not necessarily to be provided combining the maximum each other.

Consequently, a gradual remarkable increase of the front glass pane thickness occurred, now reaching, in still rather rare cases 45 mm of thickness with a weight up to 75 kg/m². Beyond the limit case, for high speed trains it can be indicated an thickness average of about 28 mm, with a weight of 50 kg/m².

At the same time, the aesthetical and aerodynamical needings imposed by the railway car designers have recently brought to a remarkable increase of the front glass pane surface, often realised with a not flat shape, but rather with a curve, cylindrical o spherical shape.

In some cases, surfaces up to 6 m² are provided, with an average surface of about 3-4 m² on curved surfaces. Thus, total masses of the front glass panes reaching and passing 200 kg are obtained.

Shapes imposed by the designers involve the use of aerodynamic noses often realised by composite materials, on a mould, with large shape and geometrical size tolerances along the support perimeter, this requiring not negligible working tolerances.

The coupling between the glass pane and the body therefore involves the need of adjust tolerances along the template plane (the plane perpendicular to the glass pane surface in correspondence of the edge), in average and approximately corresponding to -0/+5 mm, and along the glass pane plane, or along the surface of its outer face, in average and approximately corresponding to -4/+0 mm.

In case the fixing systems do not ensure the possibility of adjusting these tolerance variations, or in case flexibility of the composite material structures of the train during the motion transmit stresses to the glass pane, the latter is dynamically stressed and subjected to the breakage risk of its glass components, or to the delamination of the composite material inner layers. The large mass of the glass panes increases this risk due to the dynamic effect caused by the vibrations during the vehicle motion.

Since from the birth of the safety stratified glass panes at the end of the 70th, front glass panes were inserted by the manufacturer within a aluminium frame, the section of which was realised by two shell parts, closed together to tighten the glass pane by the provision of one or more gaskets. Thus the assembly was bolted to the railway vehicle body, and eventually the spare glass pane was replaced unbolting the damaged glass pane comprising its frame and placing a new one with an interchangeable frame.

Frames of damaged glass panes were, or were not, recycled in function of the working convenience and of their marginal value.

As it is evident, this system was expensive and therefore for low speed railway cars and generally in cases were the rules required impact resistance not very high, for a certain period substantially olive-shaped rubber gaskets have been employed, inserted about the front glass pane at the factory or by the installer, and then by the usual flush method, inserted about a metallic lip suitably created on the front section of the car.

Solutions described allowed a rather fast mounting and the lost of the gasket, much cheaper than the frame, in case the glass pane is replaced.

However, a less good control of strong ballistic impacts were obtained.

With the discover of the structural adhesives in 1993 it has been possible the direct gluing of the glass pane of the railway vehicle. In this case, glass pane were temporarily fixed by outer fixed joints, and the space between glass pane and boy, adjusted by shims obtained with suitable cleats and gaskets, was filled in with structural adhesive that, polymerising, allowed a strong adhesion between glass pane and railway vehicle body, thus adjusting all the misalignments and the tolerances of static workings.

However, it was not possible to obtain a reduction of the dynamic stresses (torsion and vibrations), and a drastic limit were present at the time of replacement of the glass panes, since structural adhesive can be efficiently removed only using ultrasound knives with long dismounting times and particularly very long mounting time due to the polymerisation time of the adhesive, often of about 24 hours with respect to the 6 hours on the average required by the railway authority for the replacement of a front glass pane and the consequent availability of the train for service.

In view of the above, the Applicant has realised a device which can adjust with a high efficiency the static working tolerances and the deformation and dynamic torsion tolerances imposed during the use of the vehicle.

Another object of the present invention is that of suggesting a solution for a device able to allow the fast mounting and the dismounting of glass panes having sizes and weight as mentioned in the above.

It is therefore specific object of the present invention an elastic fixing device for windshields and box or bodies lateral glass panes for vehicles, particularly for railway vehicles, said glass pane having a lower edge, a front edge and a rear edge, and said vehicle body having a resting edge and an inner rear edge, the fixing device being comprised of a monolithic or composite shaped gasket, having a first substantially vertical section, faced downward, a second substantially horizontal section, respectively for the coupling with said rear edge and said lower edge of the glass pane, a third substantially vertical section, vertically placed between the glass pane and the body, substantially flush with respect to the outer profile of the glass pane, a fourth connection section, faced inwardly, substantially parallel with respect to said body resting edge, and a fifth substantially vertical section, extending upward, coupled with the rear edge of the body, said second, third and fourth sections creating an empty room between glass pane and body, the shaping of the gasket being such to confer a flexion work capability and an elastic dampening and elastic coupling joint function.

Preferably, according to the invention, said first and second section are coupled to the glass pane by gluing or capsulation or co-extrusion.

Still according to the invention, said third section can extend upward, externally with respect to said glass pane, on the surface opposite to the coupling surface of said first section.

In this case, said first, second and third sections can be coupled to the windshield by introduction into the U-shaped room.

Always according to the invention, sealing lugs can be provided along said fourth section, for the sealing between the gasket and said body resting edge.

Furthermore, the coupling between said fifth section of the gasket and the rear surface of the body can occur by a series of bolt, passing through suitable holes, on said third section of the gasket being eventually provided insertion holes, provided with suitable covers.

Further, according to the invention, the coupling between said fifth section of the gasket and the rear surface of the body can be obtained by gluing.

Still according to the invention, between said fifth section of the gasket and said rear edge of the vehicle body a sealing gasket can be placed.

Furthermore, according to the invention, said fifth section of the gasket can be substantially inverted U shaped, in such a way to be astride the rear edge of the body vehicle.

The gasket of the fixing device according to the invention can further provide inner (or not) reinforcement, comprised of metallic material or any other suitable material.

According to the invention, the orientation of the first section can be even different with respect to the vertical orientation.

The present invention will be now described, for illustrative but not limitative purposes, according to its preferred embodiments, with particular reference to the figures of the enclosed drawings, wherein:
figures from 1a to 1l show section views of different fixing devices for front and lateral glass panes to a railway car;
figure 2 is a section view of a first embodiment of a fixing device according to the invention;
figure 3 is a section view of a second embodiment of a device according to the invention;
figure 4 is a section view of a third embodiment of a device according to the invention;
figure 5 is a section view of a fourth embodiment of a device according to the invention; and
figure 6 is a section view of a fifth embodiment of a device according to the invention.

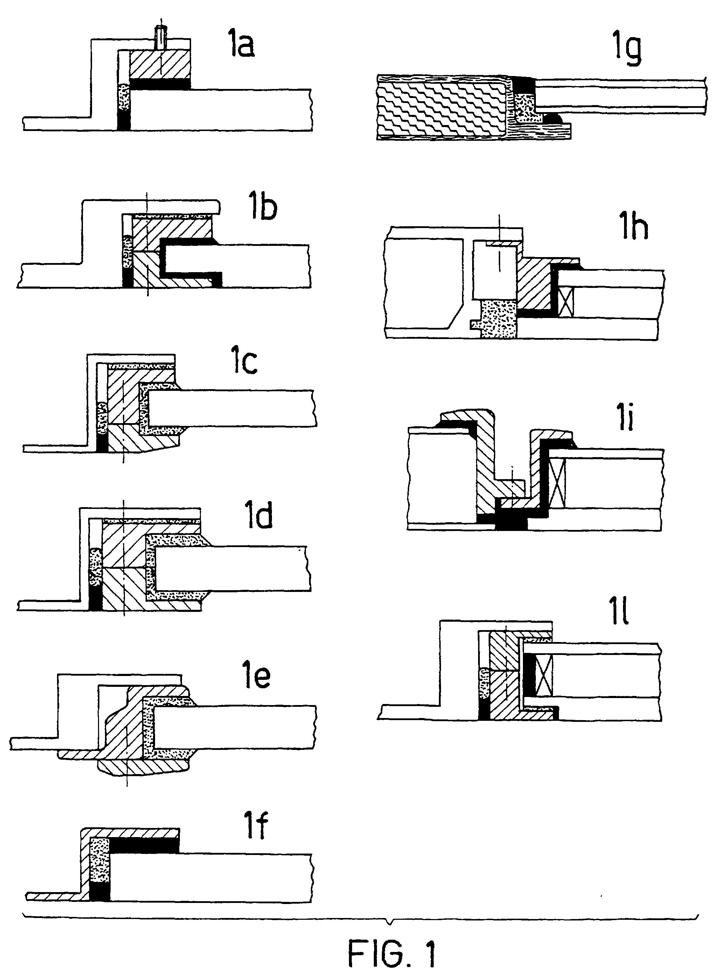

Observing first figures 1a - 1l, sections of various kind fixing device of front glass pane (figures 1a - 1g) to the body of the railway car are shown, as well as some kind of fixing devices for lateral glass panes (figures 1h - 1l) that must more or less respect the same kind of limitations, even if they are more little, generally flat and subject to lower impacts.

In the figures some alternative fixing devices with the frame of the railway car body are shown, showing details scarcely relevant with respect to the present patent application, such as the flush mounting with the car and other features.

All the systems shown in figures 1a - 1l are characterised by a strong stiffness of the glass pane - body assembly at the end of the installation, and by the fact that the almost directly transmit to the glass pane the static and dynamic stresses from the railway car structure.

The fixing device according to the invention is extremely simple, being comprised of a monolithic or composite gasket 1 to be glued or adhered all about the perimeter of the glass plate 2 on one side and to bolted to the railway car body on the other side.

The innovation consists in the configuration of the section of the gasket 1, said gasket being shaped in such a way to work under flexion in a zone of its section, acting as an elastic shock absorber and as elastic coupling joint in view of its geometrical shaping, to be suitably coupled during the design to a suitable dynamic behaviour in function of the loads to be sustained and of the materials chosen for the fixing device according to the invention.

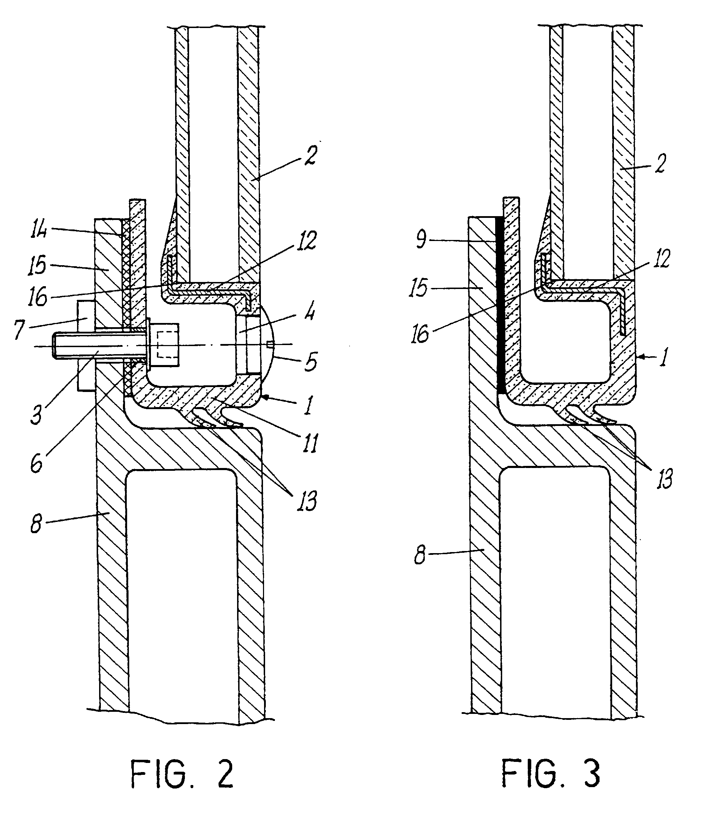

Observing now figures 2 - 6 of the enclosed drawings, it can be noted that the gasket 1 is fixed by gluing, co-extrusion, capsulation, forced fitting, or by a locking ring into a suitable seat about the perimeter of the glass pane 2 during the manufacturing step.

For the inventive solution, it is the same if the gasket is coupled during of after the manufacturing of the glass pane 2, even not by the same manufacturing company.

Then, the gasket 1 according to the invention, is coupled to the railway car body 8 by a series of bolts (figure 2) inserted through the same through suitable holes 4 to be eventually covered by an aesthetic cover 5.

The gasket 1 can provide a reinforce of the through hole 6. The bolt 3 is coupled into a threading comprised of a nut or ring 7 fixed to the inner part of the railway car body 8, suitably configured.

The fixing system shown in figure 2 providing bolts constitutes a great advantage in term of solidity, mounting and dismounting time.

However, this kind of fixing device can be replaced according to the invention with another kind of fixing device.

In figures 3 - 6 alternative solutions with respect to the bolting are shown.

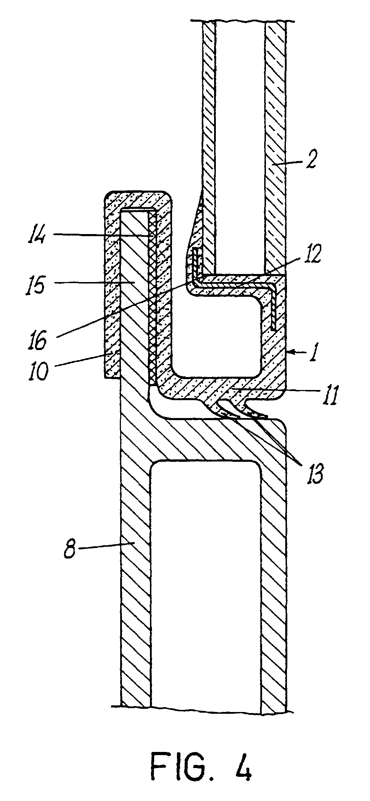

In figure 3 a solution is shown providing the fixing of the gasket 1 to the body 8 by gluing 9, while in figure 4 the coupling occurs with a specific shaping of the gasket 1, providing a U rear shaping above coupled with the body profile, but that can also take different shape.

The accommodation action of the static tolerances, of the dynamic and static torsion and of the vibrations is carried out by the particular "U" shaping of the central zone 11 of the gasket 1, that can freely warp under the action of the direct outer forces toward the glass pane 2 of the body 8.

To this end, metallic or plastic reinforce section 12 can be provided, even if they are not indispensable, within or outside the gasket, obtained during the manufacturing or applied after.

Detailed section and shape of the gasket 1 can obviously be calculated in function of each specific application acting on regular mechanical design parameters, such as geometry of the sections and the materials employed.

In function of the kind of application of the fixing device according to the invention, water damming lugs 13 can be provided, said lugs being realised with suitable shape, sizes and quantities, and a sealing gasket 14 between the gasket 1 and the body 8 (which is advisable, but not compulsory).

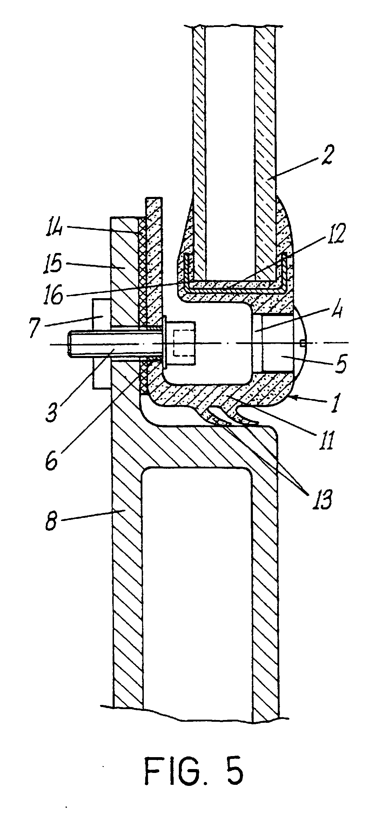

The fixing gasket 1 can include (figure 5) or not (figures 2, 3 and 4) the glass pane 2, in such a way to be flush with the outer face of the glass pane for aesthetical needings.

Lip 15 of the body section is convenient and suitable that can extend more inside with respect to outer profile 16 of the glass pane 2, in order to act as shoulder for the glass pane 2 against the body 8 in case of strong or very strong ballistic impact from the outer toward the inner, thus ensuring the maximum safety against the penetration of the whole front glass pane into the guide cabin (situation that is strictly verified for aeronautical impacts and required for many high speed trains during the test of the prototype of the body/nose assembly).

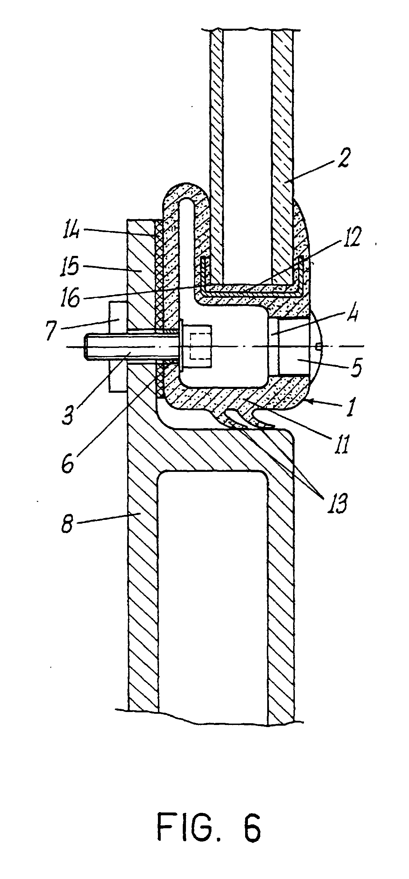

In figure 6 it is shown a solution identical to the one shown in figure 5, wherein the gasket 1 according to the invention is closed above between the glass pane 2 and the body 8.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Elastic fixing device for windshields and box or bodies lateral glass panes (2), for vehicles, particularly for railway vehicles, said glass pane (2) having a lower edge, a front edge and a rear edge, and said vehicle body having a resting edge and an inner rear edge, the fixing device being characterised in that it is comprised of a monolithic or composite shaped gasket (1), having a first substantially vertical section, faced downward, a second substantially horizontal section, respectively for the coupling with said rear edge and said lower edge of the glass pane, a third substantially vertical section, vertically placed between the glass pane and the body, substantially flush with respect to the outer profile of the glass pane, a fourth connection section, faced inwardly, substantially parallel with respect to said body resting edge, and a fifth substantially vertical section, extending upward, coupled with the rear edge of the body, said second, third and fourth sections creating an empty room between glass pane and body, the shaping of the gasket being such to confer a flexion work capability and an elastic dampening and elastic coupling joint function.

2. Elastic fixing device according to claim 1, characterised in that said first and second section are coupled to the glass pane by gluing or capsulation or co-extrusion.

3. Elastic fixing device according to one of the preceding claims, characterised in that said third section extends upward, externally with respect to said glass pane, on the surface opposite to the coupling surface of said first section.

4. Elastic fixing device according to claim 3, characterised in that said first, second and third sections are coupled to the windshield by introduction into the U-shaped room.

5. Elastic fixing device according to one of the preceding claims, characterised in that sealing lugs (13) are provided along said fourth section, for the sealing between the gasket and said body resting edge.

6. Elastic fixing device according to one of the preceding claims, characterised in that the coupling between said fifth section of the gasket and the rear surface of the body occurs by a series of bolt (3), passing through suitable holes (6), on said third section of the gasket being eventually provided insertion holes (4), provided with suitable covers (5).

7. Elastic fixing device according to one of the preceding claims 1 - 5, characterised in that the coupling between said fifth section of the gasket and the rear surface of the body is obtained by gluing.

8. Elastic fixing device according to one of the preceding claims, characterised in that between said fifth section of the gasket and said rear edge of the vehicle body a sealing gasket is placed.

9. Elastic fixing device according to one of the preceding claims, characterised in that said fifth section of the gasket is substantially inverted U shaped, in such a way to astride the rear edge of the body vehicle.

10. Elastic fixing device according to one of the preceding claims, characterised in that the gasket of the fixing device according to the invention provides inner (or not) reinforcement, comprised of metallic material or any other suitable material.

11. Elastic fixing device according to one of the preceding claims, characterised in that the orientation of the first section is different with respect to the vertical orientation.

12. Elastic fixing device according to one of the preceding claims, characterised in that said first and fourth section of the gasket are joined so as to create a closed chamber.

## Patentansprüche

1. Vorrichtung zur elastischen Befestigung von Windschutzscheiben oder seitlichen Glasscheiben (2) für Kasten oder Korper Von Fahrzeugun, insbesondere Schienenfahrzeugen, wobei diese Glaschziben (2) einen unteren Rand, einen vorderen und einen hinteren Rand haben und wobei der Fahrzeugkörper einen Stützrand und einen inneren Hinterrand aufweist, dadurch gekennzeichnet, dass die Vorrichtung eine einstückige oder zusammengesetze Dichtung (1) hat, mit einem ersten wesentlich senkrechten, nach unten weisenden Dichtungsteil; einem zweiten wesentlich wagerechten Dichtungsteil, die zur Ankupplung mit dem vorgenannten hinteren Rand bzw. mit dem vorgenanten unteren Rand der Glasscheibe vorgesehen sind; einem dritten wesentlich senkrechten Dichtungsteil, der senkrecht zwischen der Glasschaibe and dem Fahrzeugs körper angeordnet ist und wesenthin mit dem Aussenprofil der Glasscheibe fluchtet; einem vierten nach Innen weisenden Dichtungsteil, der wesentlich parallel zum vorgenannten Stützrand des Fahrzeugskörper angeordnet ist; und einem fünften sich wesentlich senkrecht nach oben erstreckenden und an den hinteren Rand des Faberzeugskörper angekuppelten Dichtungsteil, wobei die vorgenannte zweite, dritte und vierte Dichtungsteile einen leeren Raum zwischen der Glasscheibe und dem Fahrzeugskörper bilden und die Dichtung se gestaltet ist, dass sie eine eine Biegefähigkeit und eine elastische Dämpslungs und Kupplungsfunktion gewährleistet.

2. Vorrichtung nach Anspruch 1, dadurch getennzeichnet, dass der vorgenannten erste und zweite Dichtungsteile an die Glasscheibe durch Klebverlindung ober Kapselung oder auch durch Koextrusion angekuppelt sind.

3. Vorrichtung nach je einem der vorhergehenden Ansprüche, dadurch gekennzeichnet, dass der dritte Dichtungsteil sich aussenseitig gegenüber der Glasscheibe nach oben auf der der Ankupplungsfleche des vorgenannten ersten Dichtungsteils gegenüberstehenden Fläche erstreckt.

4. Vorrichtung nach Anspruch 3, dadurch gebennzeichnet, dass die vergenannten erste, zweite und dritte Dichtungsteile an die Glasscheibe durch Einführung in eine U-förmigen Raum angekuppelt sind.

5. Vorrichtung nach je einem der vorhergehenden Ansprüche, dadurch gekennzeichnet, dass lägs des vorgenannten vierten Dichtungsteils Rippen (13) zur Dichtverbindung zwischen der Dichtung und dem Stützrand des Fahrzeugskörpers vorgesehen sind.

6. Vorrichtung nach je einem der vorhergehenden Ansprüche, dadurch gekennzeichnet, dass die Kupplung zwischen dem vorgeinannten fünften Dichtungsteil und der hinteren Fläche des Fahrzeugskörpers durch eine Reihe von Bolzen (3) durchgeführt wird, die durch entsprechende Löcher (6) am vorgenannten dritten Dichtungsteil durchgehen, wobei gegebenfalls Einfürungslöcher (4) mit entsprechenden Abdeckungen (5) vorgeschen sind.

7. Vorrichtung nach je einem der vorhergehenden Ansprüche, dadurch gekennzeichnet, dass die Kupplung zwischen dem vorgenannte füften Dichtungsteil und der hinteren Fläche des Fakzeugskörpers durch Klebverbindung erhalten wird.

8. Vorrichtung nach je einem der vorhergehenden Ansprüche, dadurch gekennzeichnet, dass zwischen dem vorgenannten fünften Dichtungsteil und dem Hinterrand des Fahrzeugskörpers eine Dichtung angeordnet ist.

9. Vorrichtung nach je einem der vorhergehenden Ansprüche, dadurch gekennzeichnet, dass der vorgenanne fünfte Dichtungsteil eine wesentlich umgekehrte U-Form hat, die den Hinterrand des Fahrzungskörpers überbrückt.

10. Vorrichtung nach je einem der vorhergehenden Ansprüche, dadurch gekennzeichnet, dass die Dichtung der Befestigungsvorrichtung nach der Erfindung eine innere (oder nicht) Verstärkung bildet, die aus einem Metaliwerkstoff oder anderen angebrachte Werkstoff besteht.

11. Vorrichtung nach je einem der vorhergehenden Ansprüche, dadurch gekennzeichnet, dass die Richtung des ersten Dichtungsteiles unterschiedlich gegenüber der senkrechten Richtung ist.

12. Vorrichtung nach je einem der vorhergehenden Ansprüche, dadurch gekennzeichnet, dass die vorgenannten erste und vierte Dichtungsteile so miteinander verbunden sind, dass eine geschlossene Kammer gebildet wird.

## Revendications

1. Dispositif pour la fixation élastique de pare- brises on de plaques de verre laterales de corps de véhicules, notamment de véhicules ferroviaires, lesdittes plaques de verre (2) ayant un bord inférieure, un bord frontal et un bord postérieur et ledit corps de véhicule ayant un bord d'appui et un bord inférieur postérieur, le dispositive de fixation étant caractérisé en ce qu'il présente un joint d'étanchéite monolithique ou composite (1) ayant une premiere section substantiellement verticale, tournée en bas, une deuxième section substantiellement horizontale, pour couplage avec ledit bord postérieur et ledit bord inférieur de ladite plaque de verre, respectivement, une troisième section substantiellement verticale, placée verticalement entre la plaque de verre et le corps, substantiellement en ligne par rapport au profile extérieur de la plaque de verre, une quatrième section de couplage, tournée vers inférieur, d'une facon substantiellement parallele par rapport audit bord d'appui du corps et un cenquième section substantiellement verticale étandant en haut, couplés avec le bord postérieur du corps, lesdites deuxième, troisième et quatrième sections formant un espace vide entre la plaque de verre et le corps, la configuration du joint d'étanchéite étant elle que'ilest susceptible d'effectuer le travail de flexion et une fonction d'amortissement élastique et de joint élastique.

2. Dispositif pour la fixation élastiques selon la révendication, 1, caractérisé en ce que lesdittes premiere et deuxième sections sont couplés à la plaque de verre par collage ou co-extrusion.

3. Dispositif pour la fixation élastique selon l'une quelconque des revendicatications précédentes, caractérisé en ce que ladite troisième section s'étand en haut, exterieurement par rapport à ladite plaque de verre, sur la surface opposée à la surface de couplage de ladite premiere section.

4. Dispositif pour la fixation élastique selon la rivendication 3, caractérisé en ce que lesdites premiere, deuxième et troisième sections sont accoupplées au pare- brise par introduction dans l'espace à forme de U.

5. Dispositif pour la fixation èlastique selon l'une quelconque des revendications précédentes, caractérisé en ce que des aìlletes d'étanchéité (13) sont prévues le long deladite quatrième section pour réaliser l'étancheité entre le joint d'étanchéité et ledit bord d'appui du corps.

6. Dispositif pour la fixation èlastique selon l'une quelconque des revendications précédentes, caractérisé en ce que le couplage entre ladite cinquième section du joint et la surface postérieure du corps est effectué par une série de boulons (3) passants à travers trous appropriés (6) sur ladite troisiéme section , étant eventuellement prévues des trons d'insertion pourvus des couvercles appropriés.

7. Dispositif pour la fixation élastique selon les revendications précédentes 1-5, caractérise en ce que le couplage entre ladite cinquième section du joint et la surface postérieure du corps est réalisé par collage.

8. Dispositif pour la fixation élastique selon l'une quelunque des revendications précédentes, caractérisé en ce que ladite cinquiéme section du joint et ledit bord postérieur du corps de véhicule est placé un joint de scellage.

9. Dispositif pour la fixation élastique selon les revendications précédentes caractérisé en ce que ladite cinquiéme section est substantiellement en forme de U inverte de facôn à chevaucher le bord postérieur du corps de véhicule.

10. Dispositif pour la fixation élastique selon l'une quelconque des revendications précédentes caractérisé en ce que le joint d'étanchisté du dispositif de fixation selon l'invention présente un renforcement interieure ou non, réalisé d'un matérial métalique ou d'un autre matérial approprié.

11. Dispositif pour al fixation élastique selon l'une quelconque des revendications précédentes caractérisé en ce que l'orientation de la premiere section est different par rapport à l'orientation verticale.

12. Dispositif pour la fixation élastique selon l'une quelconque des revendications précédentes, caractérisé en ce que dites premiere et quatrième sections du joint sont unies de facôn à former une chambre fermée
